# FASCICULE DE BREVET EUROPEEN

(11) **EP 1 543 072 B1**
(45) Date de publication et mention de la délivrance du brevet: **14.06.2017**
(21) Numéro de dépôt: 03793748.9
(22) Date de dépôt: 22.08.2003
(51) Int. Cl.: C08L 21/00, C08K 5/00, B60C 1/00, C08K 5/103

(54) **COMPOSITION DE CAOUTCHOUC POUR BANDE DE ROULEMENT DE PNEUMATIQUE**
KAUTSCHUKZUSAMMENSETZUNG FÜR REIFENLAUFFLÄCHE
RUBBER COMPOSITION FOR TYRE TREADS

(30) Priorité: 04.09.2002 FR 0210950
(43) Date de publication de la demande: 22.06.2005
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: LABAUZE, Gérard, F-63100 Clermont-Ferrand (FR); VASSEUR, Didier, F-63100 Clermont-Ferrand (FR)
(74) Mandataire: Sidhu, Alban
(86) Numéro de dépôt international: PCT/EP2003/009334
(87) Numéro de publication internationale: WO 2004/022644

(56) Documents cités:
- EP-A- 0 561 761
- EP-A- 0 899 297
- WO-A-02/088238
- US-A- 5 252 649

## Description

La présente invention concerne une bande de roulement d'enveloppe pour pneumatique hiver qui est adaptée pour évoluer tant sur des sols glacés, enneigés que mouillés. L'invention s'applique notamment à des enveloppes de pneumatique de type tourisme.

On a cherché ces dernières années à concevoir des pneumatiques dépourvus de clous destinés à présenter une adhérence améliorée sur des sols hivernaux à coefficient de glissement élevé, tels que des sols glacés ou enneigés. On a par exemple choisi d'utiliser différents types d'inclusions dans les compositions de bande de roulement pour pneumatiques hivernaux, telles que des billes de verre, des fibres synthétiques, des charges minérales, ou des poudrettes de produits naturels (coquilles de noix, écorce de riz, etc.).

On peut citer le document de brevet américain US-A-5 967 211 présentant une composition de caoutchouc pour bande de roulement de pneumatique de type « glace ». Cette composition comprend à titre de matrice élastomère des élastomères diéniques de températures de transition vitreuse Tg inférieures à -30° C, de la silice à titre de charge renforçante et des additifs spécifiquement prévus pour améliorer l'adhérence du pneumatique sur des sols glacés. Ces additifs sont constitués de fibres organiques choisies parmi les fibres de cellulose et de bois ou de microsphères creuses de céramique.

Un inconvénient majeur des enveloppes de pneumatique qui sont spécifiquement conçues pour présenter une adhérence améliorée sur des sols glacés ou enneigés est qu'elles présentent une résistance à l'usure fortement pénalisée et une adhérence sur sol mouillé également dégradée.

Cette déchéance de la résistance à l'usure se traduit non seulement par une durée de vie réduite des pneumatiques, qui implique une augmentation de la quantité de pneumatiques usés destinés au recyclage, mais encore par un accroissement dans le temps des débris de ces pneumatiques projetés au sol lors du roulage, ce qui contribue à polluer l'environnement.

En effet, il est bien connu de l'homme de l'art que l'amélioration d'une performance d'adhérence d'un pneumatique sur un type particulier de sol est souvent obtenue au détriment d'autres performances, telles que l'adhérence sur un autre type de sol à coefficient de glissement radicalement différent ou la résistance à l'usure, et l'on n'a pas réellement réussi à ce jour à améliorer à la fois la résistance à l'usure et l'adhérence sur sol mouillé des pneumatiques de type « glace » ou « neige » qui sont spécialement conçus pour présenter une adhérence améliorée sur des sols glacés ou enneigés.

Le but de la présente invention est de remédier à cet inconvénient, et il est atteint en ce que les demanderesses viennent de découvrir d'une manière surprenante que l'association, dans une composition de caoutchouc réticulée présentant une dureté Shore A supérieure à 45 et inférieure à 57, mesurée selon la norme ASTM D 2240 de 1997,
(a) d'une matrice élastomère comprenant :
   (pce : parties en poids pour 100 parties d'élastomère(s)) :
      (i) selon une quantité supérieure à 25 pce et allant jusqu'à 100 pce, un ou plusieurs élastomères diéniques présentant chacun une température de transition vitreuse Tg comprise entre -75° C et -40° C,
      (ii) selon une quantité inférieure à 75 pce et allant jusqu'à 0 pce, un ou plusieurs élastomères diéniques présentant chacun une température de transition vitreuse Tg comprise entre -110° C et -75° C,
(b) selon une quantité allant de 5 pce à 35 pce, d'au moins une résine plastifiante hydrocarbonée miscible dans ledit ou lesdits élastomères diéniques, ladite résine présentant une température de transition vitreuse Tg comprise entre 10° C et 150° C et une masse moléculaire moyenne en nombre comprise entre 400 g/mol et 2000 g/mol, et
(c) selon une quantité allant de 5 pce à 35 à titre de plastifiant naturel comprenant au moins un triester d'acide gras de glycérol, au moins une huile végétale de tournesol présentant une Tg comprise entre -100 et -70°C, l'acide oléique présentant au moins 60% en poids de la totalité d'acide gras.
permet de rendre cette composition de caoutchouc utilisable pour constituer une bande de roulement d'enveloppe de pneumatique, avantageusement de type tourisme, qui est bien adaptée pour évoluer sur des sols glacés et enneigés, du fait qu'elle présente une adhérence sur ces sols analogue à celle des enveloppes connues dont les bandes de roulement incorporent uniquement des huiles plastifiantes de type aromatique, naphténique et/ou paraffinique à titre de plastifiant, tout en présentant notamment une résistance à l'usure et une adhérence sur sol mouillé améliorées par rapport à celles de ces mêmes enveloppes connues.

L'état de la technique est notamment constitué par les demandes de brevet ou brevets WO-A-02 088238, EP-A-0 899 297 et US-A-5 252 649, cités dans le rapport de recherche internationale. WO-A-02 088238, opposable pour la nouveauté seulement de la présente invention, ne décrit pas de bande de roulement de pneumatique hiver dont la dureté Shore A est comprise entre 45 et 57. EP-A-0 899 297 ne dit rien sur le besoin spécifique des bandes de roulement pour pneumatique type hiver, ni sur l'emploi de plastifiant du type glycérol, a fortiori d'huile végétale de tournesol. US-A-5 252 649 enseigne l'utilisation, en bandes de roulement de pneumatiques hiver, d'une huile de tournesol standard c'est-à-dire à faible taux d'acide oléique.

On notera que la présence dans la composition selon l'invention de ladite résine plastifiante hydrocarbonée et dudit composé plastifiant, venant en remplacement partiel ou total de ces huiles plastifiantes usuelles, permet de conférer une endurance améliorée à l'enveloppe selon l'invention dont la bande de roulement incorpore cette composition.

En effet, des essais ont montré que ce remplacement permet de minimiser la migration de ces huiles (ou de la supprimer, dans le cas de leur remplacement total) dans les mélanges adjacents de l'enveloppe et, par conséquent, de minimiser l'altération des propriétés desdits mélanges, telles que leur rigidité et leur résistance à la fissuration, ce qui permet d'améliorer la résistance de l'enveloppe à la séparation des nappes sommet de triangulation qu'elle comporte dans son armature de sommet (cette résistance à la séparation des nappes est parfois appelée résistance au « clivage » par l'homme du métier).

Selon une autre caractéristique de l'invention, ladite composition comprend ladite ou lesdites huiles plastifiantes de type paraffinique, aromatique ou naphténique selon une quantité allant de 0 pce à 15 pce et, avantageusement dans le cas précité du remplacement total de ces huiles par la résine et le composé selon l'invention, ladite composition peut être dépourvue d'une telle huile plastifiante.

On notera que l'amélioration de la résistance à l'usure que présente une bande de roulement de pneumatique selon l'invention implique une réduction du tassement par compression auquel est soumise cette bande de roulement en roulage et, par conséquent, une réduction de la perte en roulage des plastifiants polluants, tels que l'huile aromatique.

Il en résulte une réduction significative de la pollution de l'environnement, laquelle est encore minimisée par la quantité réduite ou nulle d'huile aromatique qui est initialement introduite dans la composition de bande de roulement selon l'invention.

Par élastomère diénique, on entend de manière connue un élastomère issu au moins en partie (homopolymère ou copolymère) de monomères diènes (monomères porteurs de deux doubles liaisons carbone-carbone, conjuguées ou non).

Le ou chaque élastomère diénique de la composition selon l'invention est de préférence "fortement insaturé", c'est-à-dire qu'il est issu de monomères diènes conjugués ayant un taux molaire de motifs issus de diènes conjugués qui est supérieur à 50 %.

Selon une caractéristique préférentielle de l'invention :
- ledit ou chaque élastomère diénique de Tg comprise entre -75° C et -40° C appartient au groupe constitué par des copolymères styrène/ butadiène préparés en émulsion, des polyisoprènes naturels, des polyisoprènes de synthèse présentant un taux d'enchaînements cis-1,4 supérieur à 95 %, des terpolymères styrène/ butadiène/ isoprène préparés en solution et par un mélange de ces élastomères, et
- ledit ou chaque élastomère diénique de Tg comprise entre -110° C et -75° C, de préférence allant de -105° C à -80° C, appartient au groupe constitué par des polybutadiènes à taux d'enchaînements cis-1,4. supérieur à 90 % et des copolymères isoprène/ butadiène préparés en solution comprenant des unités butadiène selon un taux égal ou supérieur à 50 %.

A titre encore plus préférentiel,
- ledit ou chaque élastomère diénique de Tg comprise entre -75° C et -40° C appartiennent au groupe constitué par des polyisoprènes naturels et des polyisoprènes de synthèse présentant un taux d'enchaînements cis-1,4 supérieur à 95 %, et
- ledit ou chaque élastomère diénique de Tg comprise entre -110° C et -75° C est un polybutadiène à taux d'enchaînements cis-1,4 supérieur à 90 %.

Selon un premier exemple de réalisation de l'invention, ladite composition comprend un coupage dudit ou desdits élastomères diéniques de Tg comprise entre -75° C et -40° C et dudit ou desdits élastomères diéniques de Tg comprise entre -110° C et -75° C.

Selon un premier mode avantageux de réalisation de ce premier exemple, ladite composition comprend un coupage de l'un au moins desdits polybutadiènes présentant un taux d'enchaînements cis-1,4 supérieur à 90 % avec l'un au moins desdits polyisoprènes naturels ou de synthèse (présentant un taux d'enchaînements cis-1,4 supérieur à 95 %).

Selon un second mode avantageux de réalisation de ce premier exemple, ladite composition comprend un coupage de l'un au moins desdits polybutadiènes présentant un taux d'enchâmements cis-1,4 supérieur à 90 % avec l'un au moins desdits terpolymères de styrène, d'isoprène et de butadiène préparés en solution.

Selon un second exemple de réalisation de l'invention, ladite composition comprend ledit ou lesdits élastomères diéniques de Tg comprise entre -75° C et -40° C selon une quantité égale à 100 pce.

La résine plastifiante qui est spécifiquement sélectionnée pour être utilisée dans la composition selon l'invention est une résine exclusivement hydrocarbonée, c'est-à-dire qui ne comporte que des atomes de carbone et d'hydrogène. Cette résine peut être de type aliphatique et/ou aromatique et elle est telle qu'elle est miscible dans ledit ou lesdits élastomères diéniques. Sont utilisables dans la composition selon l'invention :
(1) les résines hydrocarbonées de type « aliphatique » définies dans l'article de M.J. Zohuriaan-Mehr et H.Omidian J.M.S REV MACROMOL. CHEM. PHYS. C40(1),23-49 (2000), qui sont essentiellement constituées d'unités aliphatiques.
   (la) Selon un premier exemple avantageux de réalisation de l'invention, on utilise à titre de résine de type « aliphatique » une résine plastifiante de masse moléculaire moyenne en nombre allant de 400 à 2000 g/mol et de température de transition vitreuse supérieure à 50° C et inférieure à 120° C qui comprend, selon une fraction massique allant de 70 % à 100 %, des unités issues de la polymérisation d'un terpène insaturé monocyclique ou bicyclique.
      De préférence, cette résine « aliphatique » présente une masse moléculaire moyenne en nombre allant de 500 à 1000 g/mol et, à titre encore plus préférentiel, allant de 550 à 700 g/mol. Egalement à titre préférentiel, cette résine « aliphatique » présente une température de transition vitreuse allant de 60° C à 100° C et un indice de polymolécularité inférieur à 2.
      Selon une autre caractéristique préférentielle, cette résine « aliphatique » comprend lesdites unités issues de la polymérisation d'un terpène insaturé monocyclique ou bicyclique selon une fraction massique allant de 90 % à 100 %.
      - Selon un premier mode de réalisation de ce premier exemple, ledit terpène insaturé dont est majoritairement ou totalement issue la résine est un terpène insaturé monocyclique, de préférence un limonène (i.e. méthyl-1 isopropényl-4 cyclohexène) tel que le d-limonène (énantiomère dextrogyre) ou bien le dipentène (racémique des énantiomères dextrogyre et lévogyre du limonène).

      Conformément à ce premier mode, ladite résine peut comprendre en outre une ou plusieurs unités issues d'au moins un monomère hydrocarboné qui n'est pas un terpène insaturé monocyclique et qui peut être avantageusement un terpène insaturé bicyclique tel qu'un α-pinène (i.e. le 2,6,6-triméthylbicyclo[3.1.1]hept-2-ène), un hydrocarbure aromatique monocyclique ou polycyclique tel que le styrène ou un alkyl styrène, un diène cyclique tel que le dicyclopentadiène ou un diène conjugué tel que l'isoprène.
      Toujours conformément à ce premier mode, ladite résine peut être constituée desdites unités issues de l'homopolymérisation dudit terpène insaturé monocyclique, tel que le limonène ou le dipentène. Est avantageusement utilisable une résine issue en totalité de l'homopolymérisation du d-limonène ou du dipentène, de préférence une résine de masse moléculaire moyenne en nombre allant de 550 g/mol à 650 g/mol et une température de transition vitreuse allant de 60° C à 80° C.
      On notera que le d-limonène est un extrait naturel (il se trouve à l'état naturel dans la peau des oranges) et que, par conséquent, la résine plastifiante issue de l'homopolymérisation de ce d-limonène est d'origine exclusivement naturelle, ce qui contribue à réduire la pollution de l'environnement lors du roulage de pneumatiques dont les bandes de roulement incorporent cette résine.
      - Selon un second mode de réalisation dudit premier exemple, ledit terpène insaturé dont est majoritairement ou totalement issue la résine est un terpène insaturé bicyclique, de préférence un α-pinène.

      Conformément à ce second mode, ladite résine peut comprendre en outre une ou plusieurs unités issues d'au moins un monomère hydrocarboné qui n'est pas un terpène insaturé bicyclique et qui peut être avantageusement un terpène insaturé monocyclique tel qu'un limonène ou le dipentène, un hydrocarbure aromatique monocyclique ou polycyclique tel que le styrène ou un alkyl styrène, un diène cyclique tel que le dicyclopentadiène ou un diène conjugué tel que l'isoprène.
      Toujours conformément à ce second mode, ladite résine peut être constituée desdites unités issues de la polymérisation dudit terpène insaturé bicyclique, tel que l'α-pinène.
   (1b) Selon un second exemple avantageux de réalisation de l'invention, on utilise à titre de résine de type « aliphatique » une résine plastifiante de masse moléculaire moyenne en nombre allant de 400 à 2000 g/mol qui comprend des unités issues de la polymérisation du vinylcyclohexène.
      De préférence, cette résine présente une masse moléculaire moyenne en nombre allant de 500 à 1500 g/mol et, à titre encore plus préférentiel, allant de 550 à 1000 g/mol. Egalement à titre préférentiel, ladite résine présente une température de transition vitreuse allant de 50° C à 120° C et, à titre encore plus préférentiel, allant de 60° C à 100° C.
      Egalement à titre préférentiel, cette résine comprend lesdites unités issues de la polymérisation du vinylcyclohexène selon une fraction massique supérieure à 50 %. Avantageusement, cette fraction massique varie de 70 % à 100 % et, à titre encore plus avantageux, elle est égale à 100 % (la résine étant dans ce cas exclusivement constituée desdites unités issues de la polymérisation du vinylcyclohexène). '
      - Selon une variante de réalisation de ce second exemple, ladite résine comprend en outre une ou plusieurs autres unités dont l'une au moins est issue de la polymérisation d'un terpène insaturé monocyclique ou bicyclique.

      A titre de terpène insaturé monocyclique, on peut avantageusement utiliser un limonène ou le dipentène. A titre de terpène insaturé bicyclique, on peut avantageusement utiliser un α-pinène.
      - Selon une autre variante de réalisation de ce second exemple, ladite résine comprend en outre une ou plusieurs autres unités dont l'une au moins est issue de la polymérisation d'un hydrocarbure aromatique monocyclique ou polycyclique, tel que le styrène ou un alkyl styrène.
      - Selon une autre variante de réalisation de ce second exemple, ladite résine comprend en outre une ou plusieurs autres unités dont l'une au moins est issue de la polymérisation d'un diène cyclique, tel que le dicyclopentadiène, ou d'un diène conjugué, tel que l'isoprène.

      On notera que la fraction massique d'unités aliphatiques dans la résine « aliphatique » selon l'invention est préférentiellement supérieure à 95 %.
(2) Sont également utilisables dans la composition selon l'invention les résines intermédiaires de type «aliphatique/ aromatique », c'est-à-dire dans lesquelles la fraction massique d'unités aliphatiques varie de 80 % à 95 % (la fraction massique d'unités aromatiques variant de 5 % à 20 %).
(3) Sont également utilisables dans la composition selon l'invention les résines hydrocarbonées de type «aromatique», définies dans l'article de M.J. Zohuriaan-Mehr et H.Omidian J.M.S REV MACROMOL. CHEM. PHYS. C40(1),23-49 (2000) c'est-à-dire dont la chaîne hydrocarbonée comprend en majorité des unités aromatiques par exemple de type styrène, xylène, α-méthylstyrène, vinyl toluène ou indène.

De préférence, ces résines « aromatiques » présentent une température de transition vitreuse allant de 30° C à 60° C, et elles comprennent des unités aliphatiques et aromatiques selon des fractions massiques variant respectivement de 30 % à 50 % et de 70 % à 50 %.

A titre de résines « aromatiques », conviennent par exemple les résines à base d'α-méthylstyrène et de méthylène, ainsi que les résines à base de coumarone et d'indène.

Selon une caractéristique préférentielle de l'invention, la résine plastifiante hydrocarbonée qui est utilisée présente une Tg allant de 30° C à 120° C, de préférence supérieure à 50° C et inférieure à 120° C, et elle présente une masse moléculaire moyenne en nombre Mn allant de 500 g/mol à 1000 g/mol.

Selon une autre caractéristique préférentielle de l'invention, ledit composé plastifiant synthétique ou naturel comprenant au moins un triester d'acide gras de glycérol qui est compris dans la composition selon l'invention est tel que l'ensemble constitué par ledit ou lesdits acides gras comprend de l'acide oléique selon une fraction massique égale ou supérieure à 85 %.

Selon un exemple de réalisation de l'invention, ledit composé plastifiant comprend au moins un composé synthétique constitué d'un triester d'acide oléique de glycérol. Ledit composé plastifiant comprend au moins une huile végétale de tournesol comprenant lesdits triesters d'acides gras de glycérol et présentant une Tg comprise entre -100 et -70° C, l'acide oléique présentant au moins 60% en poids de la totalité d'acide gras. Selon un exemple avantageux de réalisation de l'invention, ladite composition comprend ladite résine plastifiante hydrocarbonée selon une quantité allant de 10 à 25 pce et ledit composé plastifiant selon une quantité allant de 15 à 30 pce.

La composition selon l'invention comprend également une charge renforçante, selon une quantité pouvant varier de 40 à 100 pce.
- Selon un premier exemple de réalisation de l'invention, ladite charge renforçante comprend une charge inorganique renforçante selon une fraction massique allant de 50 % à 100%.

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Avantageusement, ladite charge inorganique renforçante est, en totalité ou tout du moins majoritairement, de la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, même si les silices précipitées hautement dispersibles sont préférées.

De préférence, on utilise une silice présentant des surfaces spécifiques BETou CTAB qui vont toutes deux de 80 m²/g à 260 m²/g.

Dans le présent exposé, la surface spécifique BET est déterminée de manière connue, selon la méthode de Brunauer-Emmet-Teller décrite dans "The Journal of the American Chemical Society" Vol. 60, page 309, février 1938 et correspondant à la norme AFNOR-NFT-45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut citer les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, des silices précipitées traitées telles que par exemple les silices "dopées" à l'aluminium décrites dans la demande EP-A-735 088.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

A titre de charge inorganique renforçante, on peut aussi utiliser, à titre non limitatif :
- des alumines (de formule Al₂O₃), telles que les alumines à dispersibilité élevée qui sont décrites dans le document de brevet européen EP-A-810 258, ou encore
- des hydroxydes d'aluminium, tels que ceux décrits dans le document de brevet international WO-A-99/28376.

Conviennent également des charges inorganiques renforçantes comprenant les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.
- Selon un second exemple de réalisation de l'invention, ladite charge renforçante comprend du noir de carbone selon une fraction massique allant de 50 % à 100 %. Conviennent tous les noirs de carbone conventionnellement utilisés dans les enveloppes de pneumatique et particulièrement dans les bandes de roulement de telles enveloppes, notamment les noirs du type HAF, ISAF, SAF. On peut citer à titre non limitatif les noirs N115, N134, N234, N339, N347, N375.
- Selon un troisième exemple de réalisation de l'invention, ladite charge renforçante comprend un coupage de ladite charge inorganique renforçante avec du noir de carbone, la fraction massique de noir de carbone dans ladite charge renforçante étant préférentiellement choisie inférieure ou égale à 30 %.

Par exemple, les coupages noir/ silice ou les noirs partiellement ou intégralement recouverts de silice conviennent pour constituer la charge renforçante.

La composition de caoutchouc selon l'invention comprend en outre de manière classique, un agent de liaison charge inorganique renforçante / matrice élastomère (encore appelé agent de couplage), qui a pour fonction d'assurer une liaison (ou couplage) suffisante, de nature chimique et/ou physique, entre ladite charge inorganique et la matrice, tout en facilitant la dispersion de cette charge inorganique au sein de ladite matrice. '

Par agent de couplage, on entend plus précisément un agent apte à établir une connexion suffisante, de nature chimique et/ou physique, entre la charge considérée et l'élastomère, tout en facilitant la dispersion de cette charge au sein de la matrice élastomère. Un tel agent de couplage, au moins bifonctionnel, a par exemple comme formule générale simplifiée "Y-T-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère, par exemple par l'intermédiaire d'un atome de soufre;
- T représente un groupe permettant de relier Y et X.

Les agents de couplage ne doivent en particulier pas être confondus avec de simples agents de recouvrement de la charge considérée qui, de manière connue, peuvent comporter la fonction Y active vis-à-vis de la charge mais sont dépourvus de la fonction X active vis-à-vis de l'élastomère.

De tels agents de couplage, d'efficacité variable, ont été décrits dans un très grand nombre de documents et sont bien connus de l'homme du métier. On peut utiliser en fait tout agent de couplage connu pour, ou susceptible d'assurer efficacement, dans les compositions de caoutchouc diénique utilisables pour la fabrication de pneumatiques, la liaison ou couplage entre une charge inorganique renforçante telle que de la silice et un élastomère diénique, comme par exemple des organosilanes, notamment des alkoxysilanes polysulfurés ou des mercaptosilanes, ou encore des polyorganosiloxanes porteurs des fonctions X et Y précitées.

Des agents de couplage silice/élastomère, notamment, ont été décrits dans un grand nombre de documents, les plus connus étant des alkoxysilanes bifonctionnels tels que des alkoxysilanes polysulfurés.

On utilise en particulier des alkoxysilanes polysulfurés, dits "symétriques" ou "asymétriques" selon leur structure particulière, tels que décrits par exemple dans les brevets US-A-3 842 111, US-A-3 873 489, US-A-3 978 103, US-A-3 997 581, US-A-4 002 594, US-A-4 072 701, US-A-4 129 585, ou dans les brevets plus récents US-A-5 580 919, US-A-5 583 245, US-A-5 650 457, US-A-5 663 358, US-A-5 663 395, US-A-5 663 396, US-A-5 674 932, US-A-5 675 014, US-A-5 684 171, US-A-5 684 172, US-A-5 696 197, US-A-5 708 053, US-A-5 892 085, EP-A-1 043 357 qui énoncent en détail de tels composés connus.

Conviennent en particulier pour la mise en oeuvre de l'invention, sans que la définition ci-après soit limitative, des alkoxysilanes polysulfurés symétriques répondant à la formule générale (I) suivante:

(I) Z-A-Sₙ-A-Z,

dans laquelle:
- n est un entier de 2 à 8 (de préférence de 2 à 5);
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄ en particulier le propylène);
- Z répond à l'une des formules ci-après: 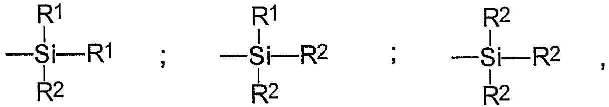 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence des groupes alkoxyle en C₁-C₈ ou cycloalkoxyle en C₅-C₈, plus préférentiellement des groupes alkoxyle en C₁-C₄, en particulier le méthoxyle et/ou l'éthoxyle).

Dans le cas d'un mélange d'alkoxysilanes polysulfurés répondant à la formule (I) ci-dessus, notamment des mélanges usuels disponibles commercialement, on comprendra que la valeur moyenne des "n" est un nombre fractionnaire, de préférence compris dans un domaine de 2 à 5.

Comme alkoxysilanes polysulfurés, on citera plus particulièrement les polysulfures (notamment les disulfures, trisulfures ou tétrasulfures) de bis-(alkoxyl(C₁-C₄)-alkyl(C₁-C₄)silylalkyl(C₁-C₄)), comme par exemple les polysulfures de bis(3-triméthoxysilylpropyl) ou de bis(3-triéthoxysilylpropyl). Parmi ces composés, on utilise notamment le tétrasulfure de bis(3-triéthoxysilylpropyl), en abrégé TESPT, de formule [(C₂H₅O)₃Si(CH₂)₃S₂]₂ ou le disulfure de bis(triéthoxysilylpropyle), en abrégé TESPD, de formule [(C₂H₅O)₃Si(CH₂)₃S]₂. Le TESPD est commercialisé par exemple par la société Degussa sous les dénominations Si266 ou Si75 (dans le second cas, sous forme d'un mélange de disulfure (à 75% en poids) et de polysulfures), ou encore par la société Witco sous la dénomination Silquest A1589. Le TESPT est commercialisé par exemple par la société Degussa sous la dénomination Si69 (ou X50S lorsqu'il est supporté à 50 % en poids sur du noir de carbone), ou encore par la société Osi Specialties sous la dénomination Silquest A1289 (dans les deux cas, mélange commercial de polysulfures avec une valeur moyenne pour n proche de 4). On citera également les monoalcoxysilanes tétrasulfurés, tels que le tétrasulfure de monoéthoxydiméthylsilylpropyle (en abrégé MESPT), qui font l'objet de la demande de brevet international PCT/EP02/03774 au nom des demanderesses.

On notera que le ou l'un au moins des élastomères diéniques utilisables dans la composition selon l'invention peut comporter un ou plusieurs groupes fonctionnels spécifiquement actifs pour un couplage à ladite charge renforçante.
(i) Pour un couplage à une charge inorganique renforçante, conviennent tous les groupes fonctionnels, couplés ou étoilés qui sont connus de l'homme du métier pour un couplage à la silice. A titre non limitatif, conviennent :
   - les groupes silanol ou polysiloxane ayant une extrémité silanol, comme cela est décrit dans le document de brevet français FR-A-2 740 778 au nom de la demanderesse. Plus précisément, ce document enseigne l'utilisation d'un agent de fonctionnalisation d'un polymère vivant obtenu par voie anionique, en vue d'obtenir une fonction active pour un couplage à de la silice. Cet agent de fonctionnalisation est constitué d'un polysiloxane cyclique, tel qu'un polyméthylcyclo -tri, -tétra ou -déca siloxane, ledit agent étant, à titre préférentiel, l'hexaméthylcyclotrisiloxane. Les polymères fonctionnalisés ainsi obtenus peuvent être séparés du milieu réactionnel conduisant à leur formation par extraction à la vapeur d'eau du solvant, sans que leur macrostructure et, par conséquent, leurs propriétés physiques n'évoluent ; et
   - les groupes alkoxysilane.
      On peut citer à ce titre la réaction de fonctionnalisation décrite dans le document de brevet international WO-A-88/05448 en vue d'un couplage à de la silice, qui consiste à faire réagir sur un polymère vivant obtenu par voie anionique un composé alkoxysilane ayant au moins un reste alkoxyle non hydrolysable. Ce composé est choisi parmi les halogénoalkylalkoxysilane.
      On peut également citer le document de brevet français FR-A-2 765 882, au titre de l'obtention de fonctions alkoxysilane. Ce document divulgue l'utilisation d'un trialkoxysilane, tel que le 3-glycidyloxypropyltrialkoxysilane, pour la fonctionnalisation d'un polymère diénique vivant, en vue du couplage à du noir de carbone ayant de la silice fixée à sa surface à titre de charge renforçante majoritaire.
(ii) Pour un couplage à du noir de carbone, on peut par exemple citer des groupes fonctionnels comprenant une liaison C-Sn. De tels groupes peuvent être obtenus comme connu en soi par réaction avec un agent de fonctionnalisation de type organohalogénoétain pouvant répondre la formule générale R₃SnCl, ou avec un agent de couplage de type organodihalogénoétain pouvant répondre à la formule générale R₂SnCl₂, ou avec un agent d'étoilage de type organotrihalogénoétain pouvant répondre à la formule générale RSnCl₃, ou de type tétrahalogénoétain pouvant répondre à la formule SnCl₄ (où R est un radical alkyle, cycloalkyle ou aryle).

Pour un couplage au noir de carbone, on peut également citer des groupes fonctionnels aminés, par exemple obtenus en utilisant la 4,4'-bis-(diéthylaminobenzophénone), ou DEAB. A titre d'exemple, on peut citer les documents de brevet FR-A-2 526 030 et US-A- 4 848 511.

Les compositions conformes à l'invention comprennent également, outre le ou les élastomères diéniques, ladite résine plastifiante, ledit composé plastifiant, éventuellement ladite huile plastifiante, ladite charge inorganique renforçante et éventuellement ledit agent de liaison, tout ou partie des autres constituants et additifs habituellement utilisés dans les compositions de caoutchouc, tels que des pigments, des anti-oxydants, des cires anti-ozonantes, un système de réticulation à base soit de soufre et/ou de peroxyde et/ou de bismaléimides, des activateurs de réticulation comprenant du monoxyde de zinc et de l'acide stéarique, un ou plusieurs agents de recouvrement de la charge inorganique renforçante tels que des alkylalcoxysilanes, des polyols, des amines ou des amides.

Les compositions selon l'invention peuvent comprendre en outre :
- des agents gonflants pour réaliser des mélanges microcellulaires, tels que l'azodicarbonamide, la dinitrosopentamethylenetetramine, la dinitrosopentastyrènetetramine, la benzènesulfonylhydrazide, et l'oxybisbenzènesulfonylhydrazide (l'azodicarbonamide étant utilisé de préférence);
- des inclusions minérales (carbonate de calcium, alumine, hydroxyde d'aluminium ou carbure de silicium) ou organiques (polymères cristallins tels que le polyéthylène, le polypropylène, le polyéthylène succinate, le polybutadiène 1,2 syndiotactique) ; et
- des fibres synthétiques (polyesters tels que le polyéthylène téréphtalate, polyamides aliphatiques tels que le polyamide 6,6, polyamides aromatiques tels que l'aramide) ou des fibres naturelles (cellulose, coton, kératine, laine, poils, etc.).

Les compositions conformes à l'invention peuvent être préparées selon les procédés connus de travail thermo-mécanique des constituants en une ou plusieurs étapes. On peut par exemple les obtenir par un travail thermo-mécanique en une étape dans un mélangeur interne qui dure de 3 à 7 minutes, avec une vitesse de rotation des palettes de 50 tours par minute, ou en deux étapes dans un mélangeur interne qui durent respectivement de 3 à 5 minutes et de 2 à 4 minutes, suivies d'une étape de finition effectuée à environ 80° C, pendant laquelle sont incorporés le soufre et les accélérateurs de vulcanisation dans le cas d'une composition à réticuler au soufre.

Une bande de roulement selon l'invention, qui est adaptée pour évoluer sur des sols glacés et enneigés tout en présentant notamment une résistance à l'usure et une adhérence sur sol mouillé améliorées, est constituée de ladite composition de caoutchouc selon l'invention.

Une enveloppe de pneumatique selon l'invention comporte cette bande de roulement.

On notera que la présente invention s'applique à tous types d'enveloppes de pneumatique, pouvant par exemple être destinées à équiper des véhicules à moteur ou non, tels que des automobiles de tourisme ou de compétition ou des véhicules à deux roues - incluant bicyclettes et véhicules légers à moteur tels que des motocyclettes - , des véhicules industriels choisis parmi camionnettes, "poids-lourd" - i.e. bus, engins de transport routier (camions, tracteurs, remorques), véhicules hors-la-route - , engins agricoles ou de génie civil, avions, autres véhicules de transport ou de manutention.

Avantageusement, l'enveloppe de pneumatique selon l'invention est de type tourisme.

Les caractéristiques précitées de la présente invention, ainsi que d'autres, seront mieux comprises à la lecture de la description suivante de plusieurs exemples de réalisation de l'invention, donnés à titre illustratif et non limitatif.

### Détermination des masses moléculaires des résines selon l'invention par la technique de chromatographie d'exclusion par la taille (SEC) :

La chromatographie d'exclusion par la taille ou SEC permet de séparer physiquement les macromolécules suivant leur taille à l'état gonflé sur des colonnes remplies de phase stationnaire poreuse. Les macromolécules sont séparées par leur volume hydrodynamique, les plus volumineuses étant éluées en premier. A partir de produits étalons commerciaux de polystyrène de basse masse moléculaire (comprise entre 104 et 90000 g/mol), les différentes masses moyennes en nombre Mn et en poids Mp sont déterminées et l'indice de polydispersité Ip calculé. Chaque échantillon de résine est solubilisé dans du tétrahydrofurane à une concentration d'environ 1 g/l.

L'appareillage utilisé est un chromatographe « WATERS, modèle Alliance 2690 ». Le solvant d'élution est le tétrahydrofurane (phase mobile), le débit de 1 ml/min., la température du système de 35°C et la durée d'analyse de 40 min. On utilise pour la phase stationnaire un jeu de trois colonnes en série, de dénominations commerciales respectives « WATERS type STYRAGEL HR4E » (colonne à lit mélangé), «WATERS type STYRAGEL HR1 » (de porosité 100 Angstrom) et « WATERS STYRAGEL HR0.5 » (de porosité 50 Angstrom).

Le volume injecté de la solution de chaque échantillon de résine est 100 µl. Le détecteur est un réfractomètre différentiel «WATERS modèle 2410» et le logiciel d'exploitation des données chromatographiques est le système « WATERS MILLENIUM » (version 3-2).

### Mesure des températures de transition vitreuse des élastomères et des plastifiants :

Les températures de transition vitreuse Tg des élastomères et des plastifiants ont été mesurées au moyen d'un calorimètre différentiel (« differential scanning calorimeter »).

Concernant les mesures de Tg pour les compositions de caoutchouc incorporant ces élastomères et ces plastifiants, on a procédé à des mesures dynamiques à une fréquence de 10 Hz et sous deux valeurs de contraintes différentes (0,2 MPa et 0,7 MPa), mesures « MDC » effectuées conformément à la norme ISO 4664 (le mode de déformation étant le cisaillement et les éprouvettes étant de forme cylindrique).

### Mesure des propriétés des compositions de caoutchouc :

- Viscosité Mooney : ML(1+4) à 100° C mesurée selon la norme ASTM D 1646.
- Modules d'allongement MA100 (à 100 %) mesuré selon la norme ASTM D 412.
- Indice de cassage Scott : force à la rupture (MPa) et allongement (en %) mesurés à 23° C selon la norme ASTM D 412 de 1998.
- Dureté Shore A : mesurée selon la norme ASTM D 2240 de 1997.
- Pertes hystérétiques (PH) : mesurées en % par rebond à 60° C au sixième choc, selon la relation suivante : PH (%) = 100 x (W₀-W₁)/W₁, avec W₀ : énergie fournie et W₁ : énergie restituée.
- Propriétés dynamiques en cisaillement : mesurées selon la norme ASTM D 2231-71, approuvée à nouveau en 1977 (mesure en fonction de la déformation effectuée à 10 Hz avec une déformation crête-crête de 0,15 % à 50 %, et mesure en fonction de la température effectuée à 10 Hz sous une contrainte répétitive de 70 ou 20 N/cm² avec un balayage en température de -80 à 100° C).

### Mesure des performances des enveloppes de pneumatique :

On a utilisé des indices relatifs de performances, par rapport à un indice 100 de référence caractérisant une enveloppe « témoin » (un indice de performance supérieur à cette base 100 rendant compte d'une performance supérieure à celle de l'enveloppe «témoin» correspondante).
- La résistance au roulement de chacune des enveloppes testées (dimensions 195/65 R15) a été mesurée par roulage sur un volant, à une température ambiante de 25° C, sous une charge de 392 daN et à une vitesse de 80 km/h, la pression interne de l'enveloppe étant de 2,1 bars.
- La résistance à l'usure de chaque enveloppe a été déterminée au moyen d'un indice relatif d'usure qui est fonction de la hauteur de gomme restante, après roulage sur un circuit routier virageux, à une vitesse moyenne de 77 km/h et jusqu'à ce que l'usure atteigne les témoins d'usure disposés dans les rainures des bandes de roulement. Pour chacun des exemples 1 à 4, on a obtenu cet indice relatif d'usure en comparant la hauteur de gomme restante d'une bande de roulement selon l'invention à la hauteur de gomme restante d'une bande de roulement « témoin », laquelle présente par définition un indice d'usure de 100.
- L'adhérence des enveloppes de pneumatique testées a été évaluée par la mesure de distances de freinage en mode de freinage « ABS », à la fois sur sol glacé et sur sol mouillé.

Plus précisément, la distance de freinage en mode « ABS » a été mesurée, d'une part, sur sol mouillé, en passant d'une vitesse de 40 km/h à 10 km/h sur du béton poli (« BP » ci-après) avec 2 mm d'eau en surface, et, d'autre part, en passant d'une vitesse de 50 km/h à 10 km/h sur du béton bitumineux (« BB » ci-après) avec 0,5 mm d'eau en surface.

L'adhérence sur glace a été évaluée sur patinoire par la mesure de distances de freinage en mode de freinage « ABS en passant de 20 km/h à 5km/h.

L'adhérence sur sol enneigé a été évaluée par un test de démarrage sur neige de type alpine, en mesurant une distance parcourue pendant un temps de 2 s à une vitesse moteur de 2000 t/min.
- Le comportement sur sol mouillé de chaque enveloppe a été évalué par le temps mis pour parcourir un tour de circuit routier virageux et arrosé, une valeur attribuée de 101 correspondant au gain d'1 seconde sur ce tour de circuit.
- La résistance des enveloppes de pneumatique à la séparation des nappes sommet a également été évaluée au moyen d'indices relatifs de performance, par rapport à un indice 100 de référence caractérisant une enveloppe « témoin » (un indice de performance supérieur à cette base 100 rendant compte d'une performance supérieure à celle de l'enveloppe « témoin » correspondante).

Cette résistance a été mesurée par un test de roulage sur un volant, dont la surface est pourvue d'obstacles (barrettes et « polars » qui viennent solliciter les bords de la ceinture de l'enveloppe constituée de deux nappes sommet de travail NST1 et NST2), à une température ambiante de 20° C, sous une charge de 490 daN et à une vitesse de 75 km/h, la pression interne de l'enveloppe étant régulée à 2,5 bars. Ce test est stoppé lorsqu'on détecte une déformation de l'armature de sommet de l'enveloppe.

Chaque enveloppe a été préalablement « étuvée » (non montée) durant 4 semaines à 65° C.

Les résultats obtenus sont exprimés sous la forme d'une performance kilométrique (base 100 pour l'enveloppe « témoin »).

### EXEMPLE 1

On a préparé une composition de caoutchouc « témoin » T1 et une composition de caoutchouc selon l'invention I1, chacune étant destinée à constituer une bande de roulement d'une enveloppe de pneumatique de type glace «tourisme» de dimensions 195/65 R15 qui est identique aux enveloppes « tourisme » commercialisées par MICHELIN sous la dénomination « Maxi ICE », les compositions de bande de roulement exceptées.

Le tableau 1 suivant contient :
- la formulation de chacune de ces compositions T1 et I1 ;
- les propriétés de chaque composition T1 et I1 à l'état non vulcanisé et vulcanisé ;
- les performances de pneumatiques dont les bandes de roulement respectives sont constituées de ces compositions T1 et I1.

Dans ce tableau 1 :
- NR est un caoutchouc naturel de type « TSSR » avec un taux d'enchaînements cis 1-4 de 100 % et une température de transition vitreuse Tg de -65° C ;
- BR cis est un polybutadiène présentant un taux d'environ 93 % d'enchaînements cis-1,4 et une température de transition vitreuse Tg de -103° C ;
- La résine plastifiante R1 est une résine commercialisée par la société HERCULES sous la dénomination « R2495 », comprenant entre 90 % et 100 % d'unités issues de la polymérisation de l'α-pinène et présentant :
   un taux d'enchaînements aliphatiques de 97 %,
   un taux d'enchaînements aromatiques de 0 %,
   des masses moléculaires moyennes en nombre Mn et en poids Mw respectivement de 820 g/mol et 1060 g/mol, et
   une température de transition vitreuse Tg de 88° C ;
- L'huile végétale H1 est une huile de tournesol « oléique » de Tg égale à -80° C (i.e.
   comprenant des triesters d'acides gras de glycérol, de manière que les acides gras comprennent de l'acide oléique selon une fraction massique supérieure à 60 %) commercialisée par la société NOVANCE ;
- 6PPD est la N-(1,3-dimétyl-butyl)-N'-phényl-p-phénylènediamine ;
- CBS est la N-cyclohexyl-benzothiazyl-sulfénamide.

**Tableau 1 :**

| | **COMPOSITION T1** | **COMPOSITION I1** |
|---|---|---|
| **FORMULATION** | | |
| Matrice élastomère | NR (50 pce) | NR (50 pce) |
| | BR cis (50 pce) | BR cis (50 pce) |
| Charge renforçante | Silice Zeosil 1165MP (65 pce) | Silice Zeosil 1165MP (65 pce) |
| Agent de liaison Silane « Si69 » (de Dégussa) | 5,2 pce | 5,2 pce |
| DPG (diphénylguanidine) | 1,5 pce | 1,5 pce |
| Huile aromatique / Huile paraffinique | 30/15 pce | 0 pce |
| Résine plastifiante R1 | 0 pce | 12 pce |
| Composé plastifiant (Huile végétale H1) | 0 pce | 28 pce |
| Acide stéarique / ZnO | 2 pce / 2,5 pce | 2 pce / 2,5 pce |
| Anti-oxydant (6PPD) | 2 | 2 pce |
| soufre / accélérateur (CBS)° | 1 pce / 2,0 pce | 1 pce / 2,0 pce |

| **PROPRIETES** | | |
|---|---|---|
| Shore A | 55 | 53 |
| MA100 à 23° C | 1,05 | 0,95 |
| PH à 60° C | 19 | 20 |

| **Propriétés dynamiques à 10 Hz, à 0,2 MPa et à 0,7 MPa de contrainte** | | |
|---|---|---|
| Tg (MDC sous 0,2 MPa) en ° C | -51 | -52 |
| Tg (MDC sous 0,7 MPa) en ° C | -47 | -46 |

| **PERFORMANCES DES ENVELOPPES DE PNEUMATIQUE (195/65 R15)** | | |
|---|---|---|
| **Résistance à l'usure sur 10000 km** | | |
| (à 5° C en moyenne sur sol mouillé à 10 % et sec à 90 % sur « 306 XT Peugeot ») | 100 | 111 |
| **Adhérence Glace** | | |
| Patinoire Tsol = -5° C / Tair = 2° C | | |
| Sur Renault Laguna 21 | | |
| Distance de freinage ABS de 20 à 5 km/h | 100 | 100 |
| **Démarrage neige** | | |
| Tsol = -10° C / Tair = -12° C | | |
| Sur BMW 316 | | |
| Distance pendant 2 s à 2000 t/min. | 100 | 104 |
| **Adhérence Sol Mouillé** | | |
| Tsol = 10° C / Tair = 12° C | | |
| Distance freinage sur Renault Laguna 2 1 | | |
| Freinage « BP » ABS de 40 à 10 km/h | 100 | 108 |
| Freinage « BB » ABS de 50 à 10 km/h | 100 | 108 |
| **Comportement sol mouillé** | | |
| (à 8° C, sur « BMW 323i ») temps au tour | 100 | 105 |
| **Résistance au roulement** (10 kg / tonne) | 100 | 97 |

| **RESISTANCE D'ENVELOPPES A LA SEPARATION DES NAPPES SOMMET** | | |
|---|---|---|
| Performance kilométrique | 100 | 116 |

On notera que la Tg de la composition I1 selon l'invention sous une contrainte dynamique de module élevé (0,7 MPa) est prévue sensiblement égale à la Tg correspondante de la composition « témoin » T1.

Comme on peut le voir au tableau 1, l'écart entre les Tg des compositions I1 et T1 qui ont été mesurées sous une contrainte dynamique de module réduit, égal à 0,2 MPa, est analogue à l'écart entre les Tg desdites compositions I1 et T1 qui ont été mesurées sous ladite contrainte de module élevé.

Cette absence de décalage entre les Tg lorsqu'on passe d'une contrainte de module élevé à une contrainte de module réduit traduit le fait que la résine R1 et l'huile de tournesol H1 sont bien miscibles dans la matrice élastomère constituée par le NR et le BR cis.

Les résultats de performances des pneumatiques montrent que l'incorporation d'une résine plastifiante de Tg comprise entre 10 et 150° C et de Mn comprise entre 400 et 2000 g/mol (essentiellement constituée d'unités issues de la polymérisation d'un terpène insaturé bicyclique) et d'une huile de tournesol « oléique » dans la composition de bande de roulement I1 selon l'invention, de dureté Shore A égale à 53 et comprenant une charge inorganique renforçante à titre de charge renforçante, confère à l'enveloppe correspondante une résistance à l'usure et une adhérence sur sol mouillé qui sont très sensiblement améliorées par rapport à celles de l'enveloppe «témoin» incorporant la composition de bande de roulement T1 (le comportement sur sol mouillé d'un véhicule équipé de ces enveloppes selon l'invention est également amélioré par rapport au même comportement d'un véhicule équipé des enveloppes « témoin »), grâce à la miscibilité précitée dans la matrice élastomère de ladite résine et de ladite huile de tournesol, cela sans pénaliser l'adhérence de ces enveloppes selon l'invention sur sols hivernaux de type neige ou glace.

On notera que la composition I1 selon l'invention est totalement dépourvue d'huile plastifiante aromatique ou paraffinique, contrairement à la composition « témoin » T1 qui en comprend des quantités élevées, ce qui contribue à la protection de l'environnement.

On notera en outre que la résine R1 et l'huile H1 selon l'invention confèrent aux enveloppes correspondantes une endurance améliorée, dans la mesure où elles améliorent leur résistance à la séparation des nappes sommet de triangulation que chacune de ces enveloppes comporte dans son armature de sommet.

### EXEMPLE 2

On a préparé des compositions de bande de roulement «témoin» T2 et selon l'invention I2, chacune étant destinée à constituer une bande de roulement d'une enveloppe de pneumatique de type glace «tourisme» de dimensions 195/65 R15 qui est identique aux enveloppes « tourisme » commercialisées par MICHELIN sous la dénomination « Maxi ICE », les compositions de bande de roulement exceptées.

Le tableau 2 suivant contient :
- la formulation de chacune de ces compositions T2 et I2 ;
- les propriétés de chaque composition T2 et I2 à l'état non vulcanisé et vulcanisé ;
- les performances de pneumatiques dont les bandes de roulement respectives sont constituées de ces compositions T2 et I2.

Dans ce tableau 2, la résine plastifiante R2 est une résine commercialisée par la société DRT sous la dénomination «Dercolyte L120 », comprenant entre 90 % et 100 % d'unités issues de la polymérisation du limonène et présentant :
un taux d'enchaînements aliphatiques de 100 %,
un taux d'enchaînements aromatiques de 0 %,
des masses moléculaires moyennes en nombre Mn et en poids Mw respectivement de 625 g/mol et 1010 g/mol, et
une température de transition vitreuse Tg de 72° C.

**Tableau 2 :**

| | **COMPOSITION T2** | **COMPOSITION I2** |
|---|---|---|
| **FORMULATION** | | |
| Matrice élastomère | NR (40 pce) | NR (40 pce) |
| | BR cis (60 pce) | BR cis (60 pce) |
| Charge renforçante | Sil. Zeosil 1165MP (25pce) | Silice Zeosil 1165MP (25 pce) |
| | N234 (35pce) | N234 (35pce) |
| Agent de liaison Silane « Si69 » (de Dégussa) | 2 pce | 2 pce |
| DPG (diphénylguanidine) | 0,5 pce | 0,5 pce |
| Huile aromatique/ paraffinique | 30/15 pce | 0 pce |
| Résine plastifiante R2 | 0 pce | 15 pce |
| Huile végétale H1 | 0 pce | 25pce |
| Acide stéarique / ZnO | 1 pce / 2,5 pce | 1 pce / 2,5 pce |
| Anti-oxydant (6PPD) | 2 pce | 2 pce |
| soufre / accélérateur (CBS)° | 1,1 pce / 2,0 pce | 1,1 pce / 2,0 pce |

| **PROPRIETES** | | |
|---|---|---|
| Shore A | 55 | 54 |
| MA100 à 23° C | 1,34 | 1,24 |
| PH à 60° C | 20,5 | 21,5 |

| **Propriétés dynamiques à 10 Hz, à 0,2 MPa et à 0,7 MPa de contrainte** | | |
|---|---|---|
| Tg (MDC sous 0,2 MPa) en ° C | -53 | -55 |
| Tg (MDC sous 0,7 MPa) en ° C | -45 | -44 |

| **PERFORMANCES DES ENVELOPPES DE PNEUMATIQUE (195/65 R15)** | | |
|---|---|---|
| **Résistance à l'usure sur 10 000 km** | | |
| (à 5° C en moyenne sur sol mouillé à 20 % et sec à 80 % sur « 306 XT Peugeot ») | 100 | 107 |
| **Adhérence Glace** | | |
| Patinoire : Tsol = -5° C / Tair = 5° C | | |
| Sur Renault Laguna 2 1 | | |
| Distance de freinage ABS de 20 à 5 km/h | 100 | 101 |
| **Démarrage neige** | | |
| Tsol = -5° C / Tair = -7° C sur BMW 316 | | |
| Distance pendant 2 s à 2000 t/min. | 100 | 102 |
| **Adhérence Sol Mouillé** | | |
| Tsol = 13° C / Tair = 13° C | | |
| Distance freinage sur Renault Laguna 2 1 | | |
| Freinage BP ABS de 40 à 10 km/h | 100 | 105 |
| Freinage BB ABS de 50 à 10 km/h | 100 | 105 |
| **Comportement sol mouillé** | | |
| (à 10° C sur « BMW 323i ») temps au tour | 100 | 105 |
| **Résistance au roulement** (11 kg / tonne) | 100 | 97 |

| **RESISTANCE D'ENVELOPPES A LA SEPARATION DES NAPPES SOMMET** | | |
|---|---|---|
| Performance kilométrique | 100 | 116 |

On notera que la Tg de la composition I2 selon l'invention sous une contrainte dynamique de module élevé (0,7 MPa) est prévue sensiblement égale à la Tg correspondante de la composition « témoin » T2.

Comme on peut le voir au tableau 2, l'écart entre les Tg des compositions I2 et T2 qui ont été mesurées sous une contrainte dynamique de module réduit, égal à 0,2 MPa, est analogue à l'écart entre les Tg desdites compositions I2 et T2 qui ont été mesurées sous ladite contrainte de module élevé.

Cette absence de décalage entre les Tg lorsqu'on passe d'une contrainte de module élevé à une contrainte de module réduit traduit le fait que la résine R2 et l'huile de tournesol H1 sont bien miscibles dans la matrice élastomère constituée par le NR et le BR cis.

Les résultats de performances des pneumatiques montrent que l'incorporation d'une résine plastifiante de Tg comprise entre 10 et 150° C et de Mn comprise entre 400 et 2000 g/mol (essentiellement constituée d'unités issues de la polymérisation d'un terpène insaturé monocyclique) et d'une huile de tournesol « oléique » dans la composition de bande de roulement I2 selon l'invention, de dureté Shore A égale à 54 et comprenant un coupage d'une charge inorganique renforçante et de noir de carbone à titre de charge renforçante, confère à l'enveloppe correspondante une résistance à l'usure et une adhérence sur sol mouillé qui sont très sensiblement améliorées par rapport à celles de l'enveloppe « témoin » incorporant la composition de bande de roulement T2 (le comportement sur sol mouillé d'un véhicule équipé de ces enveloppes selon l'invention est également amélioré par rapport au même comportement d'un véhicule équipé des enveloppes « témoin »), grâce à la miscibilité précitée dans la matrice élastomère de ladite résine et de ladite huile de tournesol, cela sans pénaliser l'adhérence de ces enveloppes selon l'invention sur sols hivernaux de type neige ou glace.

On notera que la composition I2 selon l'invention est totalement dépourvue d'huile plastifiante aromatique ou paraffinique, contrairement à la composition « témoin » T2 qui en comprend des quantités élevées, ce qui contribue à la protection de l'environnement.

On notera en outre que la résine R2 et l'huile H1 selon l'invention confèrent aux enveloppes correspondantes une endurance améliorée, dans la mesure où elles améliorent leur résistance à la séparation des nappes sommet de triangulation que chacune de ces enveloppes comporte dans son armature de sommet.

### EXEMPLE 3

On a préparé des compositions de bande de roulement «témoin» T3 et selon l'invention I3, chacune étant destinée à constituer une bande de roulement d'une enveloppe de pneumatique de type glace «tourisme haut de gamme» de dimensions 195/65 R15 qui est ' identique aux enveloppes « tourisme » commercialisées par MICHELIN sous la dénomination « Maxi ICE », les compositions de bande de roulement exceptées.

Le tableau 3 suivant contient :
- la formulation de chacune de ces compositions T3 et I3 ;
- les propriétés de chaque composition T3 et I3 à l'état non vulcanisé et vulcanisé ;
- les performances de pneumatiques dont les bandes de roulement respectives sont constituées de ces compositions T3 et I3.

Dans ce tableau 3, la résine plastifiante R3 est une résine commercialisée par la société ARIZONA sous la dénomination « Sylvagum TR7125C », comprenant entre 90 % et 100 % d'unités issues de la polymérisation du dipentène et présentant :
un taux d'enchaînements aliphatiques de 100 %,
un taux d'enchaînements aromatiques de 0 %,
des masses moléculaires moyennes en nombre Mn et en poids Mw respectivement de 630 g/mol et 950 g/mol, et
une température de transition vitreuse Tg de 70° C.

**Tableau 3 :**

| | **COMPOSITION T3** | **COMPOSITION I3** |
|---|---|---|
| **FORMULATION** | | |
| Matrice élastomère | NR (70 pce) | NR (70 pce) |
| | BR cis (30 pce) | BR cis (30 pce) |
| Charge renforçante | Noir N234 (55 pce) | Noir N234 (55 pce) |
| Huile aromatique/ paraffinique | 40 pce | 0 pce |
| Résine plastifiante R3 | 0 pce | 10 pce |
| Huile végétale H1 | 0 pce | 25pce |
| Acide stéarique / ZnO | 0,5 pce / 3 pce | 0,5 pce / 3 pce |
| Anti-oxydant (6PPD) | 2 pce | 2 pce |
| soufre / accélérateur (CBS)° | 2,5 pce / 2,2 pce | 2,5 pce / 2,2 pce |

| **PROPRIETES** | | |
|---|---|---|
| Shore A | 55 | 54 |
| MA100 à 23° C | 1,50 | 1,42 |
| PH à 60° C | 22 | 24 |

| **Propriétés dynamiques à 10 Hz, à 0,2 MPa et à 0,7 MPa de contrainte** | | |
|---|---|---|
| Tg (MDC sous 0,2 MPa) en ° C | -52 | -53 |
| Tg (MDC sous 0,7 MPa) en ° C | -46 | -44 |

| **PERFORMANCES DES ENVELOPPES DE PNEUMATIQUE (195/65 R15)** | | |
|---|---|---|
| **Résistance à l'usure sur 10 000km** | | |
| (à 10° C en moyenne sur sol mouillé à 20 % et sec à 80 % sur « 306 XT Peugeot ») | 100 | 105 |
| **Adhérence Glace** | | |
| Patinoire : Tsol = -5° C / Tair = 5° C | | |
| Sur Renault Laguna 2 1 | | |
| Distance de freinage ABS de 20 à 5 km/h | 100 | 102 |
| **Démarrage neige** | | |
| Tsol = -5° C / Tair = -7° C sur BMW 316 | | |
| Distance pendant 2 s à 2000 t/min. | 100 | 103 |
| **Adhérence Sol Mouillé** | | |
| Tsol = 13° C / Tair =13° C | | |
| Distance freinage sur Renault Laguna 2 1 | | |
| Freinage « BP » ABS de 40 à 10 km/h | 100 | 104 |
| Freinage « BB » ABS de 50 à 10 km/h | 100 | 104 |
| **Comportement sol mouillé** | 100 | 104 |
| (à 10° C sur« BMW 323i ») temps au tour | | |
| **Résistance au roulement** (11 kg / tonne) | 100 | 98 |
| **RESISTANCE D'ENVELOPPES A LA SEPARATION DES NAPPES SOMMET** | | |
| Performance kilométrique | 100 | 116 |

On notera que la Tg de la composition I3 selon l'invention sous une contrainte dynamique de module élevé (0,7 MPa) est prévue relativement proche de la Tg correspondante de la composition « témoin » T3.

Comme on peut le voir au tableau 3, l'écart entre les Tg des compositions I3 et T3 qui ont été mesurées sous une contrainte dynamique de module réduit, égal à 0,2 MPa, est proche de l'écart entre les Tg desdites compositions I3 et T3 qui ont été mesurées sous ladite contrainte de module élevé.

Cette absence de décalage entre les Tg lorsqu'on passe d'une contrainte de module élevé à une contrainte de module réduit traduit le fait que la résine R3 et l'huile de tournesol H1 sont bien miscibles dans la matrice élastomère constituée par le NR et BR cis.

Les résultats de performances des pneumatiques montrent que l'incorporation d'une résine plastifiante de Tg comprise entre 10 et 150° C et de Mn comprise entre 400 et 2000 g/mol (essentiellement constituée d'unités issues de la polymérisation d'un terpène insaturé monocyclique) et d'une huile de tournesol « oléique » dans la composition de bande de roulement I3 selon l'invention, de dureté Shore A égale à 54 et comprenant du noir de carbone à titre de charge renforçante, confère à l'enveloppe correspondante une résistance à l'usure et une adhérence sur sol mouillé qui sont sensiblement améliorées par rapport à celles de l'enveloppe «témoin» incorporant la composition de bande de roulement T2 (le comportement sur sol mouillé d'un véhicule équipé de ces enveloppes selon l'invention est également amélioré par rapport au même comportement d'un véhicule équipé des enveloppes « témoin »), grâce à la miscibilité précitée dans la matrice élastomère de ladite résine et de ladite huile de tournesol, cela sans pénaliser l'adhérence de ces enveloppes selon l'invention sur sols hivernaux de type neige ou glace et leur résistance au roulement.

On notera que la composition I3 selon l'invention est totalement dépourvue d'huile plastifiante aromatique ou paraffinique, contrairement à la composition « témoin » T3 qui en comprend des quantités élevées, ce qui contribue à la protection de l'environnement.

On notera en outre que la résine R3 et l'huile H1 selon l'invention confèrent aux enveloppes correspondantes une endurance améliorée, dans la mesure où elles améliorent leur résistance à la séparation des nappes sommet de triangulation que chacune de ces enveloppes comporte dans son armature de sommet.

## Revendications

1. Bande de roulement pour pneumatique hiver adaptée aux sols mouillés, enneigés ou verglacés, comportant une composition de caoutchouc réticulée présentant une dureté Shore A supérieure à 45 et inférieure à 57, mesurée à 23°C (±2°C) selon la norme ASTM D 2240 de 1997, , **caractérisée en ce que** ladite composition comprend (pce : parties en poids pour cent parties d'élastomère(s)) :
- selon une quantité supérieure à 25 pce et allant jusqu'à 100 pce, un ou plusieurs élastomères diéniques présentant chacun une température de transition vitreuse Tg comprise entre -75° C et -40° C,
- selon une quantité inférieure à 75 pce et allant jusqu'à 0 pce, un ou plusieurs élastomères diéniques présentant chacun une température de transition vitreuse Tg comprise entre -110° C et -75° C,
- selon une quantité allant de 5 pce à 35 pce, au moins une résine plastifiante hydrocarbonée miscible dans ledit ou lesdits élastomères diéniques, ladite résine présentant une température de transition vitreuse Tg comprise entre 10°C et 150° C et une masse moléculaire moyenne en nombre comprise entre 400 g/mol et 2000 g/mol, et
- selon une quantité allant de 5 pce à 35 pce, à titre de plastifiant naturel comprenant au moins un triester d'acide gras de glycérol, au moins une huile végétale de tournesol présentant une Tg comprise entre -100 et -70°C, l'acide oléique représentant au moins 60 % en poids de la totalité d'acide gras.

2. Bande de roulement selon la revendication 1, **caractérisée en ce que** :
- ledit ou chaque élastomère diénique de Tg comprise entre -75° C et -40° C appartient au groupe constitué par des copolymères styrène/ butadiène préparés en émulsion, des polyisoprènes naturels, des polyisoprènes de synthèse présentant un taux d'enchaînements cis-1,4 supérieur à 95 %, des terpolymères styrène/ butadiène/ isoprène préparés en solution et par un mélange de ces élastomères, et
- ledit ou chaque élastomère diénique de Tg comprise entre -110° C et -75° C appartient au groupe constitué par des polybutadiènes à taux d'enchaînements cis-1,4 supérieur à 90 % et des copolymères isoprène/ butadiène préparés en solution.

3. Bande de roulement selon la revendication 2, **caractérisée en ce que** :
- ledit ou chaque élastomère diénique de Tg comprise entre -75° C et -40° C appartiennent au groupe constitué par des polyisoprènes naturels et des polyisoprènes de synthèse présentant un taux d'enchaînements cis-1,4 supérieur à 95 %, et
- ledit ou chaque élastomère diénique de Tg comprise entre -110° C et -75° C est un polybutadiène à taux d'enchaînements cis-1,4 supérieur à 90 %.

4. Bande de roulement selon une des revendications précédentes, **caractérisée en ce qu'**elle comprend un coupage dudit ou desdits élastomères diéniques de Tg comprise entre-75° C et -40° C et dudit ou desdits élastomères diéniques de Tg comprise entre -110° C et-75° C.

5. Bande de roulement selon une des revendications 1 à 3, **caractérisée en ce qu'**elle comprend ledit ou lesdits élastomères diéniques de Tg comprise entre -75° C et -40° C selon une quantité égale à 100 pce.

6. Bande de roulement selon une des revendications précédentes, **caractérisée en ce que** ladite résine plastifiante hydrocarbonée présente une Tg allant de 30° C à 120° C, et une masse moléculaire moyenne en nombre Mn allant de 500 g/mol à 1000 g/mol.

7. Bande de roulement selon la revendication 6, **caractérisée en ce que** ladite résine plastifiante hydrocarbonée présente une Tg supérieure à 50° C et inférieure à 120° C.

8. Bande de roulement selon la revendication 7, **caractérisée en ce que** ladite résine comprend des unités issues de la polymérisation d'un terpène insaturé monocyclique ou bicyclique, selon une fraction massique allant de 70 % à 100 %.

9. Bande de roulement selon la revendication 8, **caractérisée en ce que** ladite résine présente une température de transition vitreuse allant de 60° C à 100° C.

10. Bande de roulement selon la revendication 8 ou 9, **caractérisée en ce que** ledit terpène insaturé est un terpène insaturé monocyclique.

11. Bande de roulement selon la revendication 10, **caractérisée en ce que** ladite résine comprend en outre une ou plusieurs unités issues d'au moins un monomère hydrocarboné qui appartient au groupe constitué par les terpènes insaturés bicycliques, les hydrocarbures aromatiques monocycliques ou polycycliques t, les diènes cycliques et les diènes conjugués.

12. Bande de roulement selon la revendication 10, **caractérisée en ce que** ladite résine est constituée desdites unités issues de la polymérisation dudit terpène insaturé monocyclique.

13. Bande de roulement selon la revendication 8 ou 9, **caractérisée en ce que** ledit terpène insaturé est un terpène insaturé bicyclique.

14. Bande de roulement selon la revendication 13, **caractérisée en ce que** ladite résine comprend en outre une ou plusieurs unités issues d'au moins un monomère hydrocarboné qui appartient au groupe constitué par les terpènes insaturés monocycliques, les hydrocarbures aromatiques monocycliques ou polycycliques, les diènes cycliques et les diènes conjugués.

15. Bande de roulement selon la revendication 13, **caractérisée en ce que** ladite résine est constituée desdites unités issues de la polymérisation dudit terpène insaturé bicyclique.

16. Bande de roulement selon la revendication 7, **caractérisée en ce que** ladite résine comprend des unités issues de la polymérisation du vinylcyclohexène.

17. Bande de roulement selon la revendication 16, **caractérisée en ce que** ladite résine est constituée desdites unités issues de la polymérisation du vinylcyclohexène.

18. Bande de roulement selon la revendication 16, **caractérisée en ce que** ladite résine comprend en outre une ou plusieurs autres unités dont l'une au moins est issue de la polymérisation d'un hydrocarbure appartenant au groupe constitué par les terpènes insaturés monocycliques, les terpènes insaturés bicycliques, les hydrocarbures aromatiques monocycliques ou polycycliques, les diènes cycliques et les diènes conjugués.

19. Bande de roulement selon une des revendications précédentes, **caractérisée en ce que**, dans ledit composé plastifiant, l'ensemble constitué par ledit ou lesdits acides gras comprend de l'acide oléique selon une fraction massique égale ou supérieure à 85 %.

20. Bande de roulement selon une des revendications précédentes, **caractérisée en ce qu'**elle comprend en outre une ou des huiles plastifiantes extraites du pétrole de type paraffinique, aromatique ou naphténique, selon une quantité allant de 0 pce à 15 pce.

21. Bande de roulement selon la revendication 20, **caractérisée en ce qu'**elle est totalement dépourvue d'huile plastifiante extraite du pétrole.

22. Bande de roulement selon une quelconque des revendications précédentes, **caractérisée en ce qu'**elle comprend ladite résine plastifiante hydrocarbonée selon une quantité allant de 10 pce à 25 pce, et ledit composé plastifiant selon une quantité allant de 15 pce à 30 pce.

23. Bande de roulement selon une quelconque des revendications 1 à 22, ladite composition comprenant une charge renforçante, **caractérisée en ce que** ladite charge renforçante comprend une charge inorganique renforçante selon une fraction massique allant de 50 % à 100 %.

24. Bande de roulement selon une des revendications 1 à 22, ladite composition comprenant une charge renforçante, **caractérisée en ce que** ladite charge renforçante comprend du noir de carbone selon une fraction massique allant de 50 % à 100 %.

25. Bande de roulement selon une des revendications 1 à 22, ladite composition comprenant une charge renforçante, **caractérisée en ce que** ladite charge renforçante comprend un coupage d'une charge inorganique renforçante et d'un noir de carbone.

26. Enveloppe de pneumatique hiver comportant une bande de roulement selon l'une quelconque des revendications 1 à 25.

## Patentansprüche

1. Lauffläche für einen Winterreifen für nasse, schneebedeckte oder vereiste Böden, die eine vernetzte Kautschukzusammensetzung mit einer Shore A-Härte von mehr als 45 und weniger als 57, gemessen bei 23°C (± 2°C) gemäß der Norm ASTM D 2240 von 1997, enthält, **dadurch gekennzeichnet, dass** die Zusammensetzung Folgendes umfasst (THE: Gewichtsteile pro hundert Teile Elastomer(e)):
- eine Menge von mehr als 25 THE und bis zu 100 THE von einem oder mehreren Dien-Elastomeren mit jeweils einer Glasübergangstemperatur Tg zwischen -75°C und -40°C,
- eine Menge von weniger als 75 THE und bis zu 0 THE von einem oder mehreren Dien-Elastomeren mit jeweils einer Glasübergangstemperatur Tg zwischen -110°C und -75°C,
- eine Menge von 5 THE bis 35 THE von mindestens einem mit dem oder den Dien-Elastomeren mischbaren, weichmachenden Kohlenwasserstoffharz, wobei das Harz eine Glasübergangstemperatur Tg zwischen 10°C und 150°C und ein zahlenmittleres Molekulargewicht zwischen 400 g/mol und 2000 g/mol aufweist, und
- als natürlicher Weichmacher, der mindestens einen Glycerinfettsäuretriester umfasst, eine Menge von 5 THE bis 35 THE von mindestens einem Sonnenblumen-Pflanzenöl mit einer Tg zwischen -100 und -70°C, wobei Ölsäure mindestens 60 Gew.-% der gesamten Fettsäure ausmacht.

2. Lauffläche nach Anspruch 1, **dadurch gekennzeichnet, dass**:
- das oder jedes Dien-Elastomer mit einer Tg zwischen -75°C und -40°C zu der Gruppe gehört, die aus in Emulsion hergestellten Styrol/Butadien-Copolymeren, natürlichen Polyisoprenen, synthetischen Polyisoprenen mit einem Anteil von cis-1,4-Aneinanderreihungen von mehr als 95%, in Lösung hergestellten Styrol/Butadien/Isopren-Terpolymeren und einem Gemisch dieser Elastomere besteht, und
- das oder jedes Dien-Elastomer mit einer Tg zwischen -110°C und -75°C zu der Gruppe gehört, die aus Polybutadienen mit einem Gehalt an cis-1,4-Aneinanderreihungen von mehr als 90% und in Lösung hergestellten Isopren/Butadien-Copolymeren besteht.

3. Lauffläche nach Anspruch 2, **dadurch gekennzeichnet, dass**:
- das oder jedes Dien-Elastomer mit einer Tg zwischen -75°C und -40°C zu der Gruppe gehören, die aus natürlichen Polyisoprenen und synthetischen Polyisoprenen mit einem Anteil an cis-1,4-Aneinanderreihungen von mehr als 95% besteht, und
- das oder jedes Dien-Elastomer mit einer Tg zwischen -110°C und -75°C ein Polybutadien mit einem Anteil an cis-1,4-Aneinanderreihungen von mehr als 90% ist.

4. Lauffläche nach einem der vorhergehenden Ansprüche, **dadurch gekennzeichnet, dass** sie eine Mischung aus dem oder den Dien-Elastomeren mit einer Tg zwischen -75°C und -40°C und dem oder den Dien-Elastomeren mit einer Tg zwischen -110°C und -75°C umfasst.

5. Lauffläche nach einem der Ansprüche 1 bis 3, **dadurch gekennzeichnet, dass** sie das oder die Dien-Elastomere mit einer Tg zwischen -75°C und -40°C in einer Menge von 100 THE enthält.

6. Lauffläche nach einem der vorhergehenden Ansprüche, **dadurch gekennzeichnet, dass** das weichmachende Kohlenwasserstoffharz eine Tg von 30°C bis 120°C und ein zahlenmittleres Molekulargewicht Mn von 500 g/mol bis 1000 g/mol aufweist.

7. Lauffläche nach Anspruch 6, **dadurch gekennzeichnet, dass** das weichmachende Kohlenwasserstoffharz eine Tg von mehr als 50°C und unter 120°C aufweist.

8. Lauffläche nach Anspruch 7, **dadurch gekennzeichnet, dass** das Harz Einheiten, die aus der Polymerisation eines monozyklischen oder bizyklischen ungesättigten Terpens herrühren, in einem Massenanteil von 70% bis 100% umfasst.

9. Lauffläche nach Anspruch 8, **dadurch gekennzeichnet, dass** das Harz eine Glasübergangstemperatur von 60°C bis 100°C aufweist.

10. Lauffläche nach Anspruch 8 oder 9, **dadurch gekennzeichnet, dass** es sich bei dem ungesättigten Terpen um ein monozyklisches ungesättigtes Terpen handelt.

11. Lauffläche nach Anspruch 10, **dadurch gekennzeichnet, dass** das Harz ferner eine oder mehrere Einheiten umfasst, die von mindestens einem Kohlenwasserstoffmonomer herrühren, das zu der Gruppe gehört, die aus ungesättigten bizyklischen Terpenen, monozyklischen oder polyzyklischen aromatischen Kohlenwasserstoffen, zyklischen Dienen und konjugierten Dienen besteht.

12. Lauffläche nach Anspruch 10, **dadurch gekennzeichnet, dass** das Harz aus den Einheiten, die aus der Polymerisation des ungesättigten monozyklischen Terpens herrühren, besteht.

13. Lauffläche nach Anspruch 8 oder 9, **dadurch gekennzeichnet, dass** das ungesättigte Terpen ein ungesättigtes bizyklisches Terpen ist.

14. Lauffläche nach Anspruch 13, **dadurch gekennzeichnet, dass** das Harz ferner eine oder mehrere Einheiten umfasst, die von mindestens einem Kohlenwasserstoffmonomer herrühren, das zu der Gruppe gehört, die aus ungesättigten monozyklischen Terpenen, monozyklischen oder polycyclischen aromatischen Kohlenwasserstoffen, zyklischen Dienen und konjugierten Dienen besteht.

15. Lauffläche nach Anspruch 13, **dadurch gekennzeichnet, dass** das Harz aus den Einheiten, die aus der Polymerisation des ungesättigten bizyklischen Terpens herrühren, besteht.

16. Lauffläche nach Anspruch 7, **dadurch gekennzeichnet, dass** das Harz Einheiten umfasst, die aus der Polymerisation von Vinylcyclohexen herrühren.

17. Lauffläche nach Anspruch 16, **dadurch gekennzeichnet, dass** das Harz aus den Einheiten, die aus der Polymerisation von Vinylcyclohexen herrühren, besteht.

18. Lauffläche nach Anspruch 16, **dadurch gekennzeichnet, dass** das Harz ferner eine oder mehrere andere Einheiten umfasst, von denen mindestens eine aus der Polymerisation eines Kohlenwasserstoffs herrührt, der zu der Gruppe gehört, die aus ungesättigten monozyklischen Terpenen, ungesättigten bizyklischen Terpenen, monozyklischen oder polyzyklischen aromatischen Kohlenwasserstoffen, zyklischen Dienen und konjugierten Dienen besteht.

19. Lauffläche nach einem der vorhergehenden Ansprüche, **dadurch gekennzeichnet, dass** in der Weichmacherverbindung die aus der oder den Fettsäuren bestehende Gruppierung Ölsäure in einem Massenanteil von gleich oder größer als 85% umfasst.

20. Lauffläche nach einem der vorhergehenden Ansprüche, **dadurch gekennzeichnet, dass** sie ferner ein oder mehr aus Erdöl extrahierte weichmachende Öle des Paraffin-, aromatischen oder naphthenischen Typs in einer Menge von 0 THE bis 15 THE enthält.

21. Lauffläche nach Anspruch 20, **dadurch gekennzeichnet, dass** sie vollständig frei von aus Erdöl extrahiertem weichmachendem Öl ist.

22. Lauffläche nach einem der vorhergehenden Ansprüche, **dadurch gekennzeichnet, dass** sie das weichmachende Kohlenwasserstoffharz in einer Menge von 10 THE bis 25 THE und die Weichmacherverbindung in einer Menge von 15 THE bis 30 THE enthält.

23. Lauffläche nach einem der Ansprüche 1 bis 22, wobei die Zusammensetzung einen verstärkenden Füllstoff umfasst, **dadurch gekennzeichnet, dass** der verstärkende Füllstoff einen anorganischen verstärkenden Füllstoff in einem Massenanteil von 50% bis 100% umfasst.

24. Lauffläche nach einem der Ansprüche 1 bis 22, wobei die Zusammensetzung einen verstärkenden Füllstoff umfasst, **dadurch gekennzeichnet, dass** der verstärkende Füllstoff Rußschwarz in einem Massenanteil von 50% bis 100% umfasst.

25. Lauffläche nach einem der Ansprüche 1 bis 22, wobei die Zusammensetzung einen verstärkenden Füllstoff umfasst, **dadurch gekennzeichnet, dass** der verstärkende Füllstoff eine Mischung aus einem anorganischen verstärkenden Füllstoff und einem Rußschwarz umfasst.

26. Winterluftreifen mit einer Lauffläche nach einem der Ansprüche 1 bis 25.

## Claims

1. Tread for a winter tyre suitable for wet, snowy or icy ground, comprising a crosslinked rubber composition exhibiting a Shore A hardness of greater than 45 and less than 57, measured at 23°C (± 2°C) according to Standard ASTM D 2240 of 1997, **characterized in that** the said composition comprises (phr: parts by weight per hundred parts of elastomer(s)):
- according to an amount of greater than 25 phr and ranging up to 100 phr, one or more diene elastomers each exhibiting a glass transition temperature Tg of between -75°C and -40°C,
- according to an amount of less than 75 phr and ranging down to 0 phr, one or more diene elastomers each exhibiting a glass transition temperature Tg of between -110°C and -75°C,
- according to an amount ranging from 5 phr to 35 phr, at least one plasticizing hydrocarbon resin which is miscible in the said diene elastomer or elastomers, the said resin exhibiting a glass transition temperature Tg of between 10°C and 150°C and a number-average molecular weight of between 400 g/mol and 2000 g/mol, and
- according to an amount ranging from 5 phr to 35 phr, as natural plasticizer comprising at least one glycerol fatty acid triester, at least one sunflower vegetable oil exhibiting a Tg of between -100 and -70°C, oleic acid representing at least 60% by weight of the totality of fatty acid.

2. Tread according to Claim 1, **characterized in that**:
- the said or each diene elastomer with a Tg of between -75°C and -40°C belongs to the group consisting of styrene/butadiene copolymers prepared in emulsion, natural polyisoprenes, synthetic polyisoprenes exhibiting a content of cis-1,4- enchainments of greater than 95%, styrene/butadiene/isoprene terpolymers prepared in solution and of a mixture of these elastomers, and
- the said or each diene elastomer with a Tg of between -110°C and -75°C belongs to the group consisting of polybutadienes comprising a content of cis-1,4- enchainments of greater than 90% and isoprene/butadiene copolymers prepared in solution.

3. Tread according to Claim 2, **characterized in that**:
- the said or each diene elastomer with a Tg of between -75°C and -40°C belong to the group consisting of natural polyisoprenes and synthetic polyisoprenes exhibiting a content of cis-1,4-enchainments of greater than 95%, and
- the said or each diene elastomer with a Tg of between -110°C and -75°C is a polybutadiene comprising a content of cis-1,4- enchainments of greater than 90%.

4. Tread according to one of the preceding claims, **characterized in that** it comprises a blend of the said diene elastomer or elastomers with a Tg of between -75°C and -40°C and of the said diene elastomer or elastomers with a Tg of between -110°C and -75°C.

5. Tread according to one of Claims 1 to 3, **characterized in that** it comprises the said diene elastomer or elastomers with a Tg of between -75°C and -40°C according to an amount equal to 100 phr.

6. Tread according to one of the preceding claims, **characterized in that** the said plasticizing hydrocarbon resin exhibits a Tg ranging from 30°C to 120°C and a number-average molecular weight Mn ranging from 500 g/mol to 1000 g/mol.

7. Tread according to Claim 6, **characterized in that** the said plasticizing hydrocarbon resin exhibits a Tg of greater than 50°C and less than 120°C.

8. Tread according to Claim 7, **characterized in that** the said resin comprises units resulting from the polymerization of an unsaturated monocyclic or bicyclic terpene, according to a fraction by weight ranging from 70% to 100%.

9. Tread according to Claim 8, **characterized in that** the said resin exhibits a glass transition temperature ranging form 60°C to 100°C.

10. Tread according to Claim 8 or 9, **characterized in that** the said unsaturated terpene is an unsaturated monocylic terpene.

11. Tread according to Claim 10, **characterized in that** the said resin additionally comprises one or more units resulting from at least one hydrocarbon monomer which belongs to the group consisting of unsaturated bicyclic terpenes, aromatic monocyclic or polycyclic hydrocarbons, cyclic dienes and conjugated dienes.

12. Tread according to Claim 10, **characterized in that** the said resin consists of the said units resulting from the polymerization of the said unsaturated monocyclic terpene.

13. Tread according to Claim 8 or 9, **characterized in that** the said unsaturated terpene is an unsaturated bicylic terpene.

14. Tread according to Claim 13, **characterized in that** the said resin additionally comprises one or more units resulting from at least one hydrocarbon monomer which belongs to the group consisting of unsaturated monocyclic terpenes, aromatic monocyclic or polycyclic hydrocarbons, cyclic dienes and conjugated dienes.

15. Tread according to Claim 13, **characterized in that** the said resin consists of the said units resulting from the polymerization of the said unsaturated bicyclic terpene.

16. Tread according to Claim 7, **characterized in that** the said resin comprises units resulting from the polymerization of vinylcyclohexene.

17. Tread according to Claim 16, **characterized in that** the said resin consists of the said units resulting from the polymerization of vinylcyclohexene.

18. Tread according to Claim 16, **characterized in that** the said resin additionally comprises one or more other units, one at least of which results from the polymerization of a hydrocarbon belonging to the group consisting of unsaturated monocyclic terpenes, unsaturated bicyclic terpenes, aromatic monocyclic or polycyclic hydrocarbons, cyclic dienes and conjugated dienes.

19. Tread according to one of the preceding claims, **characterized in that**, in the said plasticizing compound, the combination consisting of the said fatty acid or acids comprises oleic acid according to a fraction by weight equal to or greater than 85%.

20. Tread according to one of the preceding claims, **characterized in that** it additionally comprises one or more plasticizing oils extracted from petroleum of paraffinic, aromatic or naphthenic type, according to an amount ranging from 0 phr to 15 phr.

21. Tread according to Claim 20, **characterized in that** it is completely devoid of plasticizing oil extracted from petroleum.

22. Tread according to any one of the preceding claims, **characterized in that** it comprises the said plasticizing hydrocarbon resin according to an amount ranging from 10 phr to 25 phr and the said plasticizing compound according to an amount ranging from 15 phr to 30 phr.

23. Tread according to any one of Claims 1 to 22, the said composition comprising a reinforcing filler, **characterized in that** the said reinforcing filler comprises an inorganic reinforcing filler according to a fraction by weight ranging from 50% to 100%.

24. Tread according to one of Claims 1 to 22, the said composition comprising a reinforcing filler, **characterized in that** the said reinforcing filler comprises carbon black according to a fraction by weight ranging from 50% to 100%.

25. Tread according to one of Claims 1 to 22, the said composition comprising a reinforcing filler, **characterized in that** the said reinforcing filler comprises a blend of an inorganic reinforcing filler and of a carbon black.

26. Winter tyre casing comprising a tread according to any one of Claims 1 to 25.
